# EUROPEAN PATENT SPECIFICATION

(11) **EP 3 656 600 B1**
(45) Date of publication and mention of the grant of the patent: **13.09.2023**
(21) Application number: 18835604.2
(22) Date of filing: 26.03.2018
(51) Int. Cl.: B60L 15/20, B60L 15/40, B61L 27/14, B61L 3/00, B61L 15/00

(54) **DRIVING OPERATION DETERMINATION TABLE DATA CREATION UNIT, TRAIN OPERATION ASSISTANCE SYSTEM, AND TRAIN OPERATION ASSISTANCE METHOD**
EINHEIT ZUR ERSTELLUNG VON DATEN FÜR DIE BESTIMMUNG VON FAHRBETRIEBSTABELLEN, ZUGBETRIEBSUNTERSTÜTZUNGSSYSTEM UND ZUGBETRIEBSUNTERSTÜTZUNGSVERFAHREN
UNITÉ DE CRÉATION DE DONNÉES DE TABLE DE DÉTERMINATION D'OPÉRATION DE CONDUITE, SYSTÈME D'AIDE À L'OPÉRATION DE TRAIN ET PROCÉDÉ D'AIDE À L'OPÉRATION DE TRAIN

(30) Priority: 20.07.2017 JP 2017141372
(43) Date of publication of application: 27.05.2020
(73) Proprietor: Hitachi, Ltd., Tokyo 100-8280 (JP)
(72) Inventor: YOKOTA, Masataka, Tokyo 100-8280 (JP); ODA, Atsushi, Tokyo 100-8280 (JP); NISHINO, Takayoshi, Tokyo 100-8280 (JP); MIYAUCHI, Tsutomu, Tokyo 100-8280 (JP)
(74) Representative: Mewburn Ellis LLP
(86) International application number: PCT/JP2018/012235
(87) International publication number: WO 2019/017007

(56) References cited:
- EP-A1- 2 735 491
- EP-A2- 2 733 042
- JP-A- 2007 189 896
- JP-A- 2014 144 754
- JP-A- 2017 063 556

## Description

### Technical Field

The present invention relates to a driving operation determination table data creation unit according to claim 1 and to a train operation support method according to claim 9.

### Background Art

In a railway system, the traveling of individual trains must be performed so as to comply with the speed limit and keep the arrival time and arrival position accurately.

Conventionally, for a train operation in a railway system, there has been proposed and put into practical use a device having a train control function in which the system automatically executes a driving operation calculated by a computer and a train operation support function that supports a driving operation of a driver by providing information such as a switching point of the driving operation and realizes ensuring punctuality and improving energy saving effect. Note that the train control function and the train operation support function need to determine desirable driving operations at least until immediately before the driving operation is performed.

As a related art in such a technical field, for example, a train operation control system of PTL 1 is disclosed. The train operation control system disclosed in PTL 1 aims to make it possible to avoid a difference in train position and speed with respect to a re-created speed profile. One feature is that a ground device includes a speed profile generation unit that generates a speed profile from the time after the set time has elapsed using the information on the predicted train position and speed after the set time has elapsed. PTL2 proposes a travel pattern generation device which generates a travel pattern between stations based on a residual travel time at a current position and a current speed.

### Citation List

### Patent Literature

PTL 1: JP 2015-177695 A
PTL 2: JP 2017-063556 A

### Summary of Invention

### Technical Problem

Train traveling in the railway system is affected by fluctuation factors such as an overhead wire voltage and a boarding rate that fluctuate for each traveling, and the acceleration and deceleration change. For this reason, it is not possible to cause a different train to travel with a speed profile of exactly the same position and speed as the speed profile of a certain train, and even if the switching timing of the driving operations is calculated in advance, it has been difficult to reproduce that operation. In other words, it is necessary to determine an appropriate driving operation in real time in order to realize traveling that realizes system goals such as ensuring punctuality and improving energy saving effect while dealing with such fluctuation factors.

However, in a train system (calculation device) already installed in the train, available computing powers and communication capacities are limited, and available computing powers and communication capacities for the train control function and the operation support function are also limited. Therefore, it is desired that the computing cost and data traffic necessary for realizing the train control function and the operation support function are suppressed. It is also required to cope with communication delays.

Here, in the train operation control system disclosed in PTL 1, the computing cost on the equipment on the vehicle can be reduced by performing traveling computation on the ground calculation device without performing the computation on the equipment on the vehicle. However, in the train operation control system of PTL 1, when a driving operation corresponding to a plurality of conditions is transmitted in order to cope with the influence of fluctuation factors, since the speed profile for each of the many conditions needs to be always transmitted from the ground calculation device, the load on the communication capacities increases. As a result, under the equipment with limited communication capacities, a sufficient communication state cannot be maintained, and there is a possibility that an appropriate driving operation cannot be determined.

The present invention has been made in consideration of the above points and aims to propose a train operation support device, a train operation support system, and a train operation support method which can support determination of a driving operation with which ensuring of punctuality and energy saving effect can be expected in a train system having limited computing powers and communication capacities.

### Solution to Problem

In order to solve such a problem, in a first aspect of the present invention, there is provided a driving operation determination table data creation unit according to claim 1.

Further, in order to solve such a problem, in a second aspect of the present invention, there is provided a train operation support system according to claim 4.

Further, in order to solve such a problem, in a third aspect of the present invention, there is provided a train operation support method according to claim 9.

### Advantageous Effects of Invention

According to the present invention, even with limited computing powers and communication capacities, it is possible to support determination of a driving operation with which ensuring of punctuality and energy saving effect can be expected.

### Brief Description of Drawings

[FIG. 1] FIG. 1 is a functional configuration diagram of a train operation support system according to an embodiment of the present invention.
[FIG. 2] FIG. 2 is a diagram for describing an image of a speed profile by the train operation support system according to the present embodiment.
[FIG. 3] FIG. 3 is a diagram (part 1) for describing an example of driving operation determination table data information.
[FIG. 4] FIG. 4 is a diagram (part 2) for describing an example of the driving operation determination table data information.
[FIG. 5] FIG. 5 is a flowchart showing a processing procedure example of a driving operation determination process.
[FIG. 6] FIG. 6 is a diagram showing a configuration example of a driving operation determination table data creation unit.
[FIG. 7] FIG. 7 is a diagram showing an example of external factor range information.
[FIG. 8] FIG. 8 is a flowchart showing a processing procedure example of a driving operation determination table data creation process.
[FIG. 9] FIG. 9 is a diagram for describing a simulation image of a speed profile in the driving operation determination table data creation process.

### Description of Embodiments

Hereinafter, an embodiment of the present invention will be described in detail with reference to the drawings.

### (1) Configuration of train operation support system

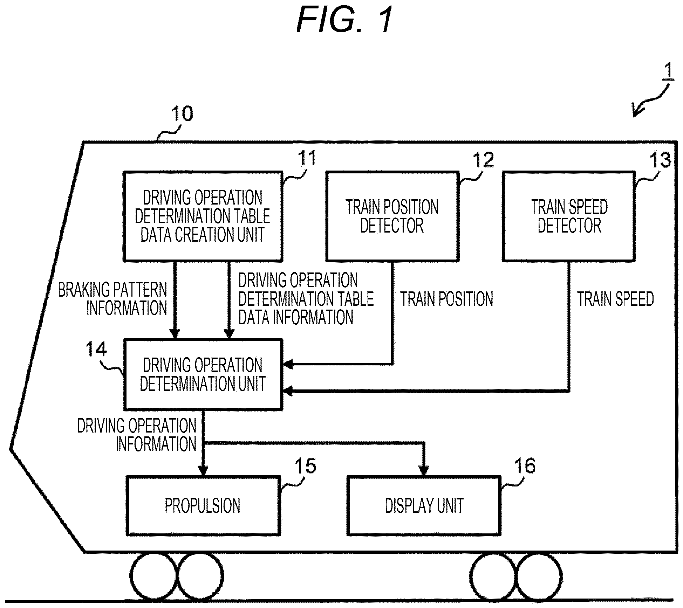

First, a configuration of a train operation support system according to an embodiment of the present invention will be described. FIG. 1 is a functional configuration diagram of the train operation support system according to the embodiment of the present invention. A train operation support system 1 is a system that controls the operation of a train 10, and is realized by, for example, an onboard device mounted on the train 10. As illustrated in FIG. 1, the train operation support system 1 includes a driving operation determination table data creation unit 11, a train position detector 12, a train speed detector 13, a driving operation determination unit 14, and a propulsion 15, and a display unit 16.

The driving operation determination table data creation unit 11 has a function of calculating driving operation determination table data information, which is information necessary for determining driving operation (providing a determination criterion for driving operation), and braking pattern information, and outputs the driving operation determination table data information and the braking pattern information obtained by calculation to the driving operation determination unit 14. The driving operation determination table data creation unit 11 corresponds to a train operation support device of the present invention, and can be realized by, for example, a computer of an onboard device mounted on the train 10. The driving operation determination table data creation unit 11 can also be realized by a calculation device installed outside the train 10, for example, on the ground. In this case, the driving operation determination table data information and the braking pattern information calculated by the driving operation determination table data creation unit 11 are transmitted to the train 10.

The train position detector 12 has a function of detecting the position of the train 10, and outputs the detected train position to the driving operation determination unit 14. The train position detector 12 is, for example, a train position detection device using a track circuit, other general positioning devices, or the like.

The train speed detector 13 has a function of detecting the speed of the train 10, and outputs the detected train speed to the driving operation determination unit 14. The train speed detector 13 is, for example, a tachometer generator.

The driving operation determination unit 14 has a function of determining driving operation information including information related to a driving operation to be performed on the train 10 based on information input from each unit (driving operation determination table data information, braking pattern information, train position information, and train speed information) . The driving operation determination unit 14 outputs the determined driving operation information to the propulsion 15 and the display unit 16. The driving operation determination unit 14 can be realized by, for example, a computer of an onboard device mounted on the train 10.

The propulsion 15 has a function of performing drive control of a motor, an engine, etc., and realizes train traveling that the train operation support system 1 intends by performing drive control based on the driving operation information output from the driving operation determination unit 14. The propulsion 15 is a drive control panel of the train 10, for example.

The display unit 16 has a display function and displays information related to train traveling determined by the train operation support system 1 based on the driving operation information output from the driving operation determination unit 14. The display unit 16 is realized by, for example, a general display or a display panel, and may be a display of the cab of the train 10 or a terminal held by a driver.

### (2) Speed profile according to the present embodiment

Next, a speed profile (speed profile according to the present embodiment) intended by the train operation support system 1 according to the present embodiment will be described. In the train operation support system 1 according to the present embodiment, the driving operation determination unit 14 determines driving operation information regarding the driving operation to be supported, and the speed profile when the driving operation of the train 10 is performed based on the driving operation information is called a speed profile according to the present embodiment. The speed profile represents the speed at each position where the train travels, in other words, the relationship between the position and speed in the traveling section of the train.

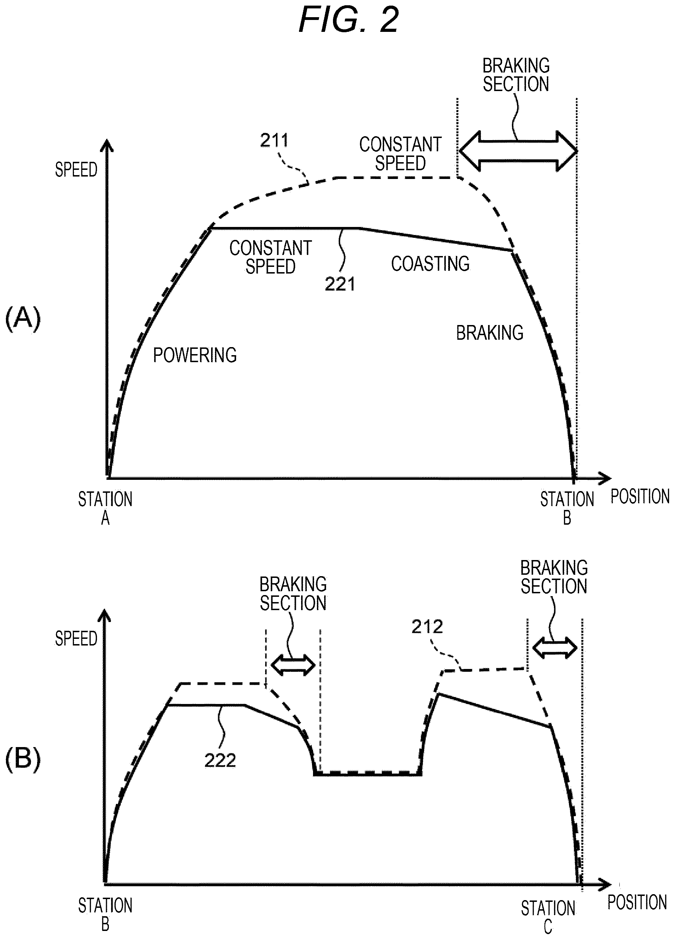

FIG. 2 is a diagram for describing an image of a speed profile by the train operation support system according to the present embodiment. FIG. 2(A) illustrates a speed profile in a traveling section from station A to station B, and FIG. 2 (B) illustrates a speed profile in a traveling section from station B to station C. In the middle of the traveling section in FIG. 2(B), there is a slowdown section where the speed limit is set lower than those of the surrounding sections.

In FIGS. 2 (A) and 2(B), examples of speed profiles of the train 10 by the train operation support system 1 according to the present embodiment are represented by solid lines 221 and 222, respectively. Further, in FIGS. 2(A) and 2(B), for comparison, as an example of a conventional speed profile, a speed profile by "fastest traveling" is represented by broken lines 211 and 212, respectively.

First, a speed profile (broken lines 211 and 212) by the conventional "fastest traveling" will be described using the train 10.

"Fastest traveling" means that the train 10 travels fastest while complying with the speed limit (within the speed limit tolerance) . For example, in the case of FIG. 2(A), after leaving station A, the train 10 accelerates without exceeding the upper limit of speed limit (powering operation), and in the section where it cannot accelerate further (exceeds the upper limit of speed limit), performs a constant speed operation to maintain the train speed, and when approaching station B at the stop point, performs a deceleration operation using a brake. According to such a speed profile of the fastest traveling, the train 10 can arrive at the stop point in the shortest time while complying with the speed limit. In addition, when there is a slowdown section as shown in FIG. 2(B), it is possible to realize the fastest speed (shortest time) while complying with the speed limit by such a driving operation that the train 10 decelerates by braking until it arrives at the speed limit start point of the slowdown section, travels at a low speed in the slowdown section, and performs powering again after passing the slowdown section.

The driving operation for performing such a speed profile by the fastest traveling can be determined based on constraints such as vehicle performance and route environment. However, in the case of a speed profile based on the fastest traveling, it is difficult to expect an energy saving effect due to an increase in acceleration/deceleration opportunities. Also, in general, a train operation schedule is planned to allow some margin time. When the driving operation is performed with the speed profile based on the fastest traveling, the train arrives earlier than the planned time, and thus there is a problem also in terms of ensuring punctuality.

FIGS. 2(A) and 2 (B) exemplify a section where the brake is used (braking section) in the speed profile of the fastest traveling, but in this description, the speed profile in the braking section is defined as a braking pattern. The braking pattern can be used to determine whether or not it is necessary to operate the brake while driving. Specifically, when the speed at a certain position is equal to or higher than that of the braking pattern at the position, it can be determined that the braking operation is necessary.

On the other hand, the train operation support system 1 according to the present embodiment can calculate the driving operation of the train 10 with which energy saving effect can be expected while ensuring punctuality. The characteristics of the speed profile (solid lines 221 and 222) by such driving operation will be described.

As illustrated by solid lines 221 and 222 in FIGS. 2(A) and 2(B), the speed profile according to the present embodiment, when compared to the speed profile by the fastest traveling, has two differences: execution of the coasting operation and switching to the constant speed operation at a speed less than the speed limit or the coasting operation.

Specifically, for example, referring to FIG. 2 (A), solid line 221 is similar to broken line 211 of the fastest traveling in that the powering operation is performed after leaving station A, but before the upper limit of the speed limit is reached, it has been switched to the constant speed operation. Moreover, the point that the coasting operation is performed before entering the braking section after the constant speed operation is also different from broken line 211, and the deceleration operation using the brake is performed after the coasting operation. This characteristic is also seen in FIG. 2 (B) where a slowdown section is provided. Here, the coasting operation means an operation by coasting traveling that causes the train 10 to travel by inertia without performing acceleration by the drive device or deceleration by the brake, and the train 10 travels by the kinetic energy that the train 10 has had so far.

According to such a speed profile of the present embodiment (hereinafter, also referred to as "appropriate speed profile of the present invention"), in comparison with the conventional fastest traveling, the train can be made to arrive at the stop point by the planned time (ensuring punctuality) by partially performing powering operation and deceleration operation (braking) similar to the speed profile by the fastest traveling, while the large energy saving effect can be expected by suppressing acceleration to the maximum speed and incorporating coasting operation. Also, according to this speed profile, when the train 10 is decelerated, not only deceleration operation by the brake is performed but also constant speed operation and coasting operation are incorporated, and thereby sudden deceleration is avoided. Therefore, it can also be expected to reduce the discomfort and pressure caused by the sudden deceleration and to improve passenger's comfort.

From the viewpoint of the order of driving operations for realizing such a speed profile according to the present embodiment, it can be said that at least one of constant speed operation or coasting operation is performed between the powering operation and the braking in the fastest traveling. In the train operation support system 1, for the switching of the respective driving operations in the speed profile according to the present embodiment, the driving operation determination unit 14 determines the switching timing of the respective driving operations using the driving operation determination table data information. Therefore, in the next chapter, a process by the driving operation determination unit 14 (driving operation determination process) will be described in detail.

### (2-1) Driving operation determination process

As described above, the driving operation determination table data information is used for the driving operation determination process by the driving operation determination unit 14. The driving operation determination table data information includes table information related to the constant speed operation (constant speed table information) and table information related to the coasting operation (coasting table information). Both table information is data that can be handled in the same table format.

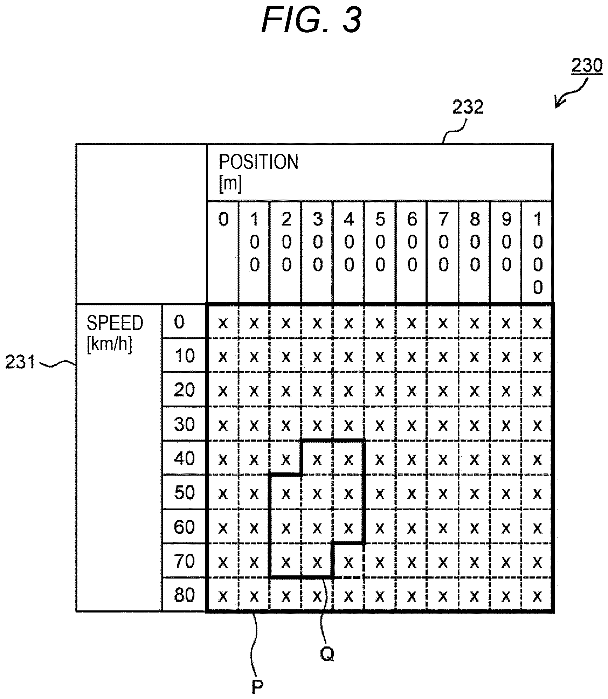

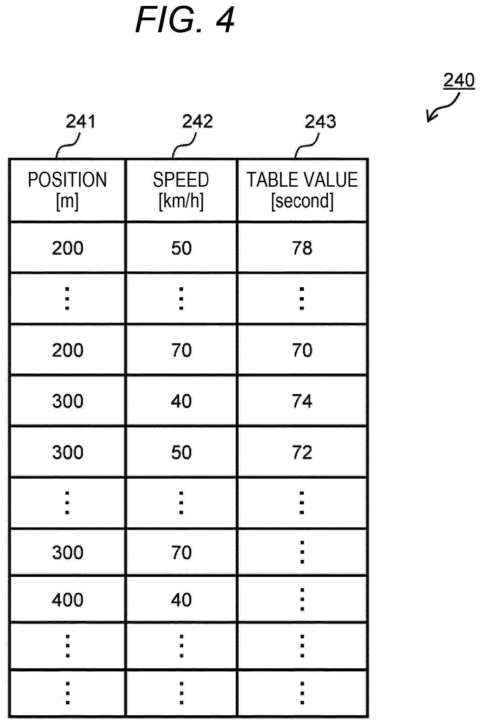

Hereinafter, the driving operation determination table data information (constant speed table information, coasting table information) will be described with reference to FIGS. 3 and 4.

FIG. 3 is a diagram (part 1) for describing an example of the driving operation determination table data information. A table 230 shown in FIG. 3 is an image example of table information (constant speed table information or coasting table information) included in the driving operation determination table data information.

As shown in FIG. 3, the table 230 is represented by two-dimensional data based on a speed 231 and a position 232 of the train. For example, in the case of FIG. 3, in the vertical axis (speed 231), the speed of the train 10 is divided by 10km/h up to the maximum speed, and in the horizontal axis (position 232), the departure point to the arrival point is divided at 100 m intervals, and thereby two-dimensional data having grid points are generated. In FIG. 3, "x" is used for simplicity, but a table value corresponding to the speed 231 and the position 232 is written at each grid point.

In addition, when represented by two-dimensional data as shown in FIG. 3, the information of the entire range (region P) can be handled as table information, but when the conditions can be limited in advance, the information of the predetermined range (region Q) may be handled as table information. For example, in the case of the constant speed table information related to the constant speed operation, for the speed 231, the table values of the low speed near the stop and the high speed near the upper limit of the speed limit are assumed not to be usually referred to, and thus they can be excluded in advance as unnecessary in the constant speed table information as the target to be processed by the driving operation determination unit 14. Similarly, also for the position 232, the table values immediately after departure (powering operation is performed) and immediately before arrival (deceleration operation is performed) are assumed not to be referred to, and thus they can be excluded in advance as unnecessary in the constant speed table information. In this way, by preliminarily limiting the data to be processed, it is possible to reduce the processing load by the driving operation determination unit 14 and to expect the effect of suppressing the waste of computing powers.

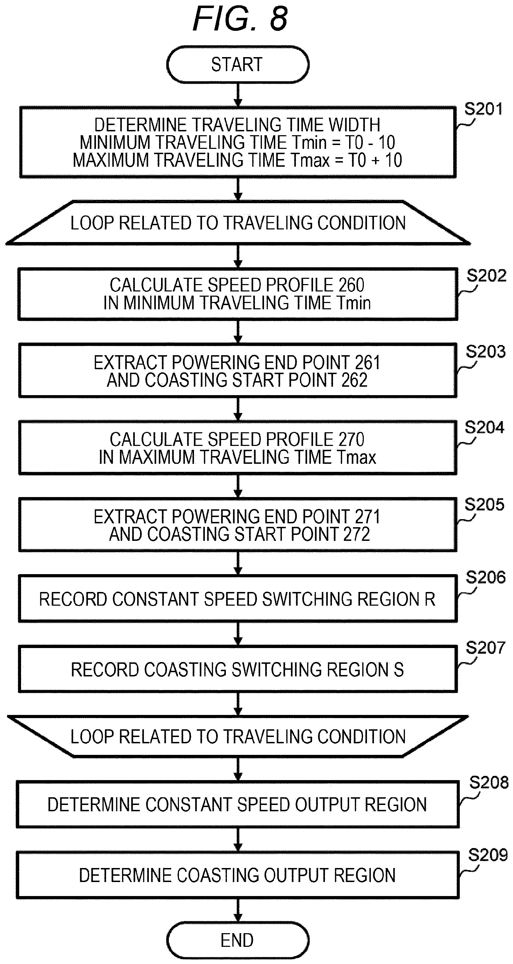

Although details will be described later with reference to FIG. 8 and the like, in the train operation support system 1 according to the present embodiment, since the driving operation determination table data information (constant speed table information, coasting table information) limited to a range (for example, region Q) in which a driving operation may actually be performed by the driving operation determination table data creation unit 11 is created and output to the driving operation determination unit 14, the processing load by the driving operation determination unit 14 can be reduced, and the waste of computing powers can be suppressed.

Further, the table information (constant speed table information or coasting table information) included in the driving operation determination table data information does not necessarily need to be configured with two-dimensional data, and may have other data configurations. FIG. 4 is a diagram (part 2) for describing an example of the driving operation determination table data information. Like the table 240 shown in FIG. 4, the table information of the driving operation determination table data information may have a data configuration in which combinations of elements (position 241, speed 242, table value 243) are listed.

With regard to the table information illustrated in FIGS. 3 and 4, in each of the constant speed table information and the coasting table information, the individual table values are set so as to include information which can be utilized for determination of the switching timing of the driving operations by the driving operation determination unit 14.

Specifically, for example, when the table 240 in FIG. 4 is constant speed table information, the table value corresponding to the position 300 m and the speed 50 km/h is defined as 72 seconds. Here, assuming that the remaining time calculated as the difference between the current time and the arrival target time is T seconds, the driving operation determination unit 14 can obtain a desirable determination result in order to achieve the system goals such as punctuality and energy saving by determining the timing of switching the driving operation to the constant speed operation as follows. That is, when T is 72 seconds or more, it is determined to switch the current driving operation to constant speed operation. When T is less than 72 seconds, it is preferable to determine to maintain the original driving operation as is without switching the driving operations.

Further, it is assumed that the constant speed table information and the coasting table information are set, for example, for each inter station, and the constant speed table value for the current state is defined by reading information corresponding to the current state consisting of the train position and the train speed from the constant speed table information. At the time of reading, when the grid point corresponding to the current state is not defined in the constant speed table information, one grid point closest to the current state may be selected and defined using the table value of the grid point. As another method, the table value may be defined based on internal divisions in the position and speed directions from the four intersections of the position and speed surrounding the current state.

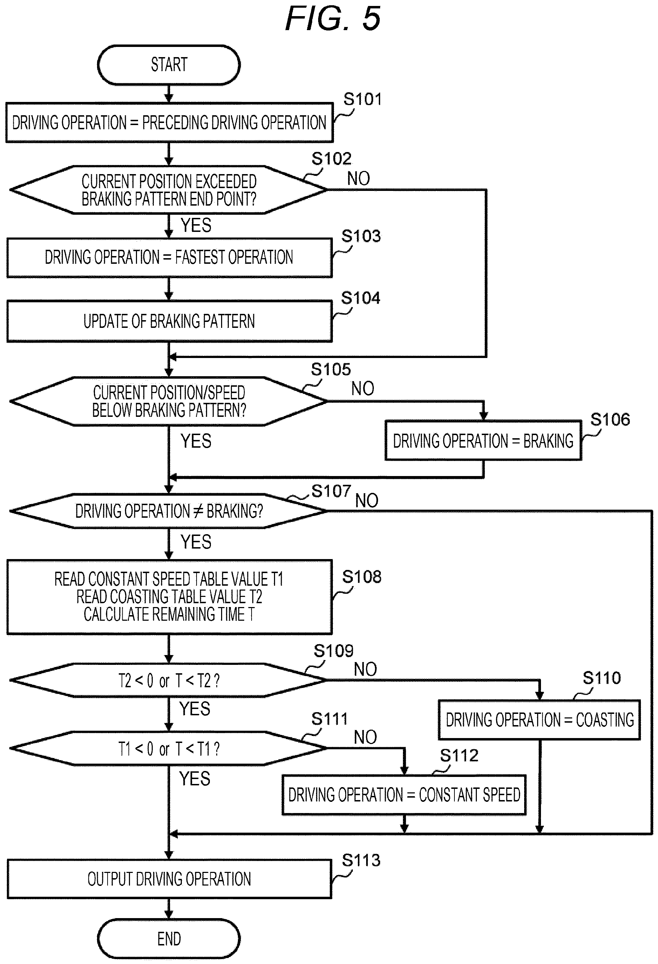

FIG. 5 is a flowchart illustrating a processing procedure example of the driving operation determination process. As described above, the driving operation determination process is a process in which the driving operation determination unit 14 determines the driving operation based on the braking pattern information and driving operation determination table data information output from the driving operation determination table data creation unit 11, and the train position output from the train position detector 12 and the train speed output from the train speed detector 13.

The algorithm illustrated in FIG. 5 determines the driving operation by selecting one appropriate driving operation from among the driving operations of "fastest operation (powering operation similar to the fastest traveling)", "constant speed (constant speed operation)", "coasting (coasting operation)", and "braking (deceleration operation using a brake)". In FIG. 5, there are "preceding driving operation" and "current braking pattern" as variables that are inherited during the loop processing, but the "preceding driving operation" immediately after departure of the departure point (for example, a station) is set to the fastest operation, and the "current braking pattern" is closer to the arrival point with respect to the departure point is and is set to the braking pattern closest to the departure point. Hereinafter, each process of FIG. 5 will be described.

First, in step S101, the driving operation is set to the preceding driving operation.

Next, in step S102, the relationship between the current train position and the end point of the current braking pattern is determined. Here, the current train position can be specified by the train position output from the train position detector 12, and the end point of the braking pattern means the point closest to the arrival point in the braking pattern. Specifically, in step S102, the driving operation determination unit 14 determines whether or not the current train position has exceeded the end point of the braking pattern. When the current train position exceeds the end point of the braking pattern, that is, when the current train position is closer to the arrival point with respect to the end point (YES in step S102), the process proceeds to step S103. When the current train position does not exceed the end point of the braking pattern (NO in step S102), the process proceeds to step S105.

In step S103, since the current train position exceeds the end point of the braking pattern, the train 10 may be accelerated within the speed limit range, and thus the driving operation determination unit 14 sets the driving operation to "fastest operation" and proceeds to step S104.

In step S104, the driving operation determination unit 14 resets the current braking pattern. As a braking pattern after resetting, a braking pattern that is closest to the arrival point side with respect to the current train position is selected. Thereafter, the process proceeds to step S105.

In step S105, whether or not the current train position and train speed exist below the braking pattern is determined by determining the following two determination items for the relationship between the current train position and train speed and the braking pattern. Specifically, the first determination item is whether or not a braking pattern is defined at the current train position, and the second determination item is whether or not the current train speed is less than the speed limit set in the braking pattern at the current train position. When the determination result of the first or second determination item is true (YES in step S105), the process proceeds to step S107, and the determination results of both the first and second determination items are false (NO in step S105), the process proceeds to step S106.

In step S106, since the braking pattern is defined for the current train position in the determination of step S105, and the current train speed is determined to be equal to or higher than the speed limit of the braking pattern, it is determined that a deceleration operation using a brake is necessary to reduce the speed of the train 10 quickly. Thus, in step S106, the driving operation is set to "braking", and the process proceeds to step S107.

In step S107, it is determined whether or not the driving operation is set to something other than "braking". When the driving operation is set to something other than "braking" (YES in step S107), the process proceeds to step S108. When the driving operation is set to "braking" (NO in step S107), the process proceeds to step S113, the currently set driving operation (in this case, "braking") is output as driving operation information, and the driving operation determination process is terminated.

In step S108, a table value corresponding to the current train position and train speed is read from the constant speed table information (see FIGS. 3 and 4) included in the driving operation determination table data information, and set as a constant speed table value T1. Here, when table values corresponding to the current train position and train speed are not defined in the constant speed table information, T1 is equal to -1. In addition, in step S108, also for the coasting table information included in the driving operation determination table data information, a table value corresponding to the current train position and train speed is read and set as a coasting table value T2. When the table value corresponding to the current train position and train speed is not defined in the coasting table information, T2 is equal to -1. Further, in step S108, a remaining time T until the target arrival time is calculated based on the current time and the target arrival time. When these processes in step S108 are completed, the process proceeds to step S109.

In step S109, it is determined whether or not the coasting operation can be selected as the driving operation. Specifically, in step S109, the remaining time T and the coasting table value T2 obtained in step S108 are used to determine the true/false of the determination formula "T2 is negative or T < T2". When the determination result is true (YES in step S109), it means that the coasting operation cannot be selected, and the process proceeds to step 5111. When the determination result is false (NO in step S109), it means that the coasting operation can be selected, and the process proceeds to step S110.

In step S110, since in the determination in step S109, it is determined that the coasting table value T2 is not negative (that is, the coasting table value corresponding to the current train position and train speed is defined in the coasting table information), and the remaining time T is equal to or greater than the coasting table value T2 (that is, there is a remaining time during which the coasting operation can be performed), it is determined that the coasting operation can be selected. Therefore, in step S110, the driving operation determination unit 14 sets the driving operation to "coasting". After step S110, the process proceeds to step S113, where the currently set driving operation (in this case, "coasting") is output as driving operation information, and the driving operation determination process is terminated.

In step S111, since it is determined by the determination in step S109 that the driving operation of the coasting operation cannot be selected, it is determined whether or not the constant speed operation can be selected as the driving operation. Specifically, in step S111, the remaining time T and the constant speed table value T1 obtained in step S108 are used to determine the true/false of the determination formula "T1 is negative or T < T1". When the determination result is true (YES in step 5111), it means that the constant speed operation cannot be selected, and the process proceeds to step S113, where the currently set driving operation (in this case, "fastest operation") is output as driving operation information, and the driving operation determination process is terminated. On the other hand, when the determination result in step S109 is false (NO in step 5111), it means that a constant speed operation can be selected, and the process proceeds to step S112.

In step S112, since in the determination in step S111, it is determined that the constant speed table value T1 is not negative (that is, the constant speed table value corresponding to the current train position and train speed is defined in the constant speed table information), and the remaining time T is equal to or greater than the constant speed table value T1 (that is, there is a remaining time in which constant speed operation can be performed), it is determined that the constant speed operation can be selected. Thus, in step S112, the driving operation determination unit 14 sets the driving operation to "constant speed". After step S112, the process proceeds to step S113, where the currently set driving operation (in this case, "constant speed") is output as driving operation information, and the driving operation determination process is terminated.

As described above, by performing the driving operation determination process illustrated in FIG. 5, the driving operation determination unit 14 determines whether or not to switch to each driving operation based on various pieces of input information and can determine an appropriate driving operation to be executed.

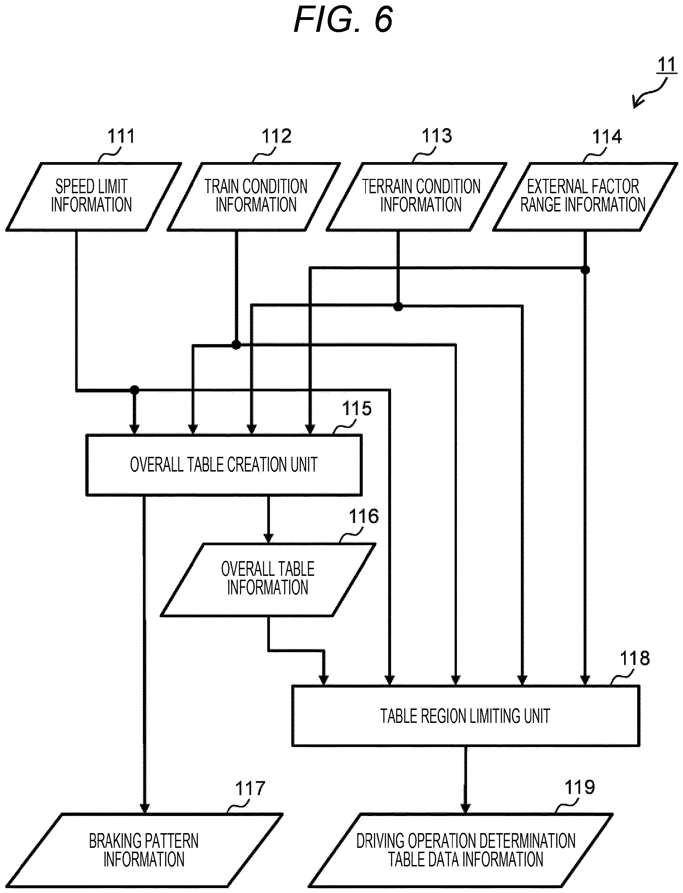

In the train operation support system 1 according to the present embodiment, a table region limiting unit 118 (see FIG. 6) of the driving operation determination table data creation unit 11 described later has a function of executing a simulation using an algorithm similar to that of the driving operation determination process by the driving operation determination unit 14. That is, the table region limiting unit 118 of the driving operation determination table data creation unit 11 can simulate an appropriate speed profile of the present invention including constant speed operation and coasting operation as illustrated by solid lines 221 and 222 in FIG. 2 by virtually calculating the driving operation by the process similar to the driving operation determination process illustrated in FIG. 5. Detailed processing by the table region limiting unit 118 will be described in detail with reference to FIG. 8.

### (2-2) Driving operation determination table data creation process

FIG. 6 is a diagram showing a configuration example of the driving operation determination table data creation unit. The driving operation determination table data creation unit 11 is a train operation support device that creates braking pattern information and driving operation determination table data information necessary for determining the driving operation in the driving operation determination unit 14.

As illustrated in FIG. 6, the driving operation determination table data creation unit 11 includes an overall table creation unit 115 and the table region limiting unit 118. The overall table creation unit 115 calculates overall table information 116 and braking pattern information 117 for the entire target section using speed limit information 111, train condition information 112, terrain condition information 113, and external factor range information 114 as input information. The table region limiting unit 118 creates driving operation determination table data information 119 using the speed limit information 111, the train condition information 112, the terrain condition information 113, the external factor range information 114, and the overall table information 116 as input information.

First, the speed limit information 111, the train condition information 112, the terrain condition information 113, and the external factor range information 114, which are input information in the driving operation determination table data creation unit 11 configured as described above, will be described.

The speed limit information 111 is information determined regarding the speed limit of the train 10 and includes information on the start position, end position, and speed limit of each speed limit section. The information on speed limit included in the speed limit information 111 may include speed limit information always effective due to curves, gradients, track layout, and the like, and speed limit information temporarily effective due to the effects of weather, construction near the route, and the like.

The train condition information 112 is information necessary to reproduce the physical behavior of the train 10, and specifically includes, for example, information such as the total weight, train length, tensile force, braking force, efficiency during powering, and efficiency during braking in the train 10.

The terrain condition information 113 is information on a route and a diagram necessary for generating a speed profile, and specifically, for example, includes the position information of the departure point, the position information of the arrival point, the gradient information between the departure point and the arrival point, the curve information between the starting point and the arrival point, and information on a predetermined traveling time to be satisfied between the starting point and the arrival point.

The external factor range information 114 is information representing a range or a representative value of an external factor value that may change every time the train 10 travels among physical quantities that affect the operation of the train 10. Specific physical quantities that can be included in the external factor range information 114 include, for example, boarding rate information, overhead wire voltage fluctuation range information, wind direction/wind speed information that affects the running resistance of the train 10, or transmission delay and control delay range information. The external factor range information 114 includes information on all or a part of the ranges of the respective physical quantities.

Each piece of information included in the external factor range information 114 only needs to be given a condition such that the fluctuation range is determined for each train (including different traveling opportunities by the same train 10), and various giving modes can be assumed.

As a first example, the external factor range information 114 may provide information on the entire range that each physical quantity can take, such as "the boarding rate is 0% to 250%".

As a second example, the external factor range information 114 may provide range information corresponding to each condition related to traveling of the train 10.

Regardless of the first example or the second example described above, in the external factor range information 114, the holding mode of the range information related to each physical quantity does not need to have a single mode, and the range information related to each physical quantity may be recorded in an independent form for each physical quantity. Specifically, for example, the boarding rate may be recorded as information on the entire possible range, the overhead wire voltage may be recorded for each train number, and the wind speed may be recorded for each time zone.

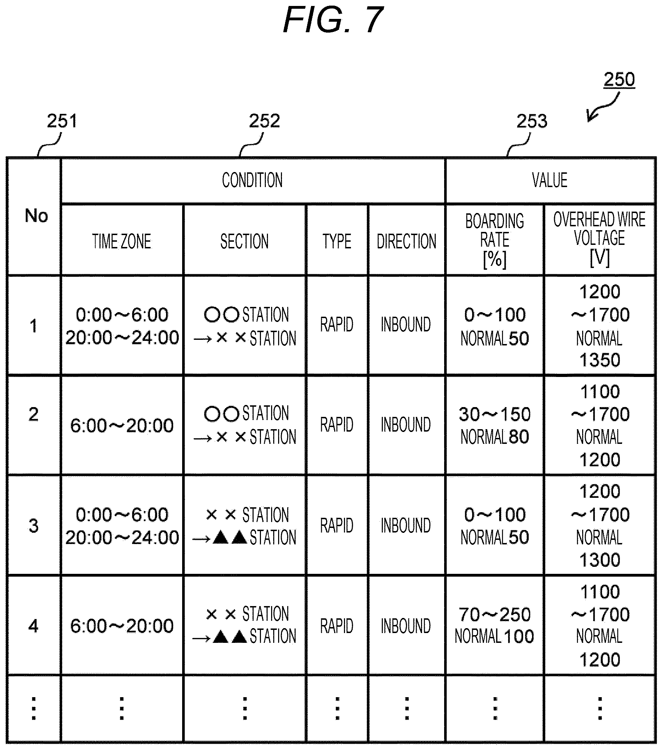

FIG. 7 is a diagram illustrating an example of external factor range information. A table 250 shown in FIG. 7 is a specific example of the external factor range information 114 according to the giving mode of the second example. No 251 is a number that collectively indicates a combination of one or more conditions written in a condition 252 and corresponds to a "traveling condition" in FIG. 8 described below. In the condition 252, conditions related to the traveling of the train 10 are written, and specifically traveling time (time zone), traveling section (section), operation type (type), and traveling direction (direction) are exemplified. Further, in a value 253, the range information of the external factor value for the train satisfying the condition 252 is written, and specifically, the boarding rate and the overhead wire voltage are exemplified. Note that "traveling conditions" of No 251 are not classified as a group of multiple conditions as in the condition 252 in FIG. 7, but for example, for each individual train number on the train timetable, the range information of the external factor value may be indicated and classified as "traveling conditions".

Next, the overall table creation unit 115 that creates the overall table information 116 and the braking pattern information 117 using the input information described above in the driving operation determination table data creation unit 11 will be described.

The overall table creation unit 115 uses the input information (speed limit information 111, train condition information 112, terrain condition information 113, and external factor range information 114) to calculate information on the remaining time for switching the driving operation at "each position" between the departure point and the arrival point of the train 10, create table information (constant speed table information, coasting table information) corresponding to the entire target section, and output the table information as the overall table information 116. Here, "each position" means a train position where it is determined whether or not to switch the driving operations by the driving operation determination process of the driving operation determination unit 14, and the overall table creation unit 115 calculate the remaining time for switching the driving operations for each train position. In addition, the overall table creation unit 115 uses the input information to calculate the braking position/speed sequence in the section where braking is required between the departure point and the arrival point of the train 10, and outputs it as the braking pattern information 117.

As described above, the overall table creation unit 115 calculates and outputs information related to the entire target section. As the overall table information 116 related to the entire target section, for example, it is preferable to image the range information of the region P in FIG. 3.

Next, the table region limiting unit 118 that creates the driving operation determination table data information 119 using the input information and the overall table information 116 in the driving operation determination table data creation unit 11 will be described.

Based on the external factor range information 114, the table region limiting unit 118 estimates range information in which a driving operation may actually be performed, and creates and outputs only table information (constant speed table information and coasting table information) within the estimated range as the driving operation determination table data information 119.

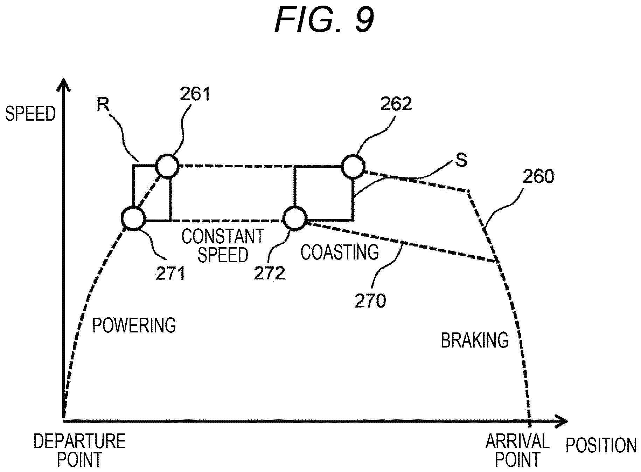

FIG. 8 is a flowchart showing a processing procedure example of the driving operation determination table data creation process. The driving operation determination table data creation process illustrated in FIG. 8 is a process for the table region limiting unit 118 to create the driving operation determination table data information 119. FIG. 9 is a diagram for describing a simulation image of a speed profile in the driving operation determination table data creation process. Hereinafter, the driving operation determination table data creation process will be described along the processing procedure illustrated in FIG. 8 with reference to the image illustrated in FIG. 9 as appropriate.

As described above in (2-1), the table region limiting unit 118 has a function of executing a simulation capable of calculating an appropriate speed profile (for example, solid lines 221 and 222 in FIG. 2) of the present invention including the constant speed operation and the coasting operation by the driving operation determination process (see FIG. 5) using the algorithm similar to that of the driving operation determination unit 14.

First, in step S201, the table region limiting unit 118 determines an allowable traveling time width before limiting the table information (constant speed table information and coasting table information) to be the driving operation determination table data information 119. The train operation time may have a predetermined allowable width for the target traveling time (target traveling time), and this allowable width corresponds to the "traveling time width".

In step S201, specifically, for example, when the traveling time width is represented by Tmin to Tmax, in a case that the target traveling time from the calculation departure point to the arrival target position is T0 seconds and the allowable width is 10 seconds, the minimum traveling time Tmin is set to "T0 - 10" and the maximum traveling time Tmax is set to "T0 + 10". Note that the allowable width is not necessarily the same between large and small. The table region limiting unit 118 thus set determines information on the table region utilized in the range of Tmin to Tmax in the subsequent processing.

Next, the table region limiting unit 118 repeatedly executes the processing of steps S202 to S207 for each of the traveling conditions (for example, No 251 in FIG. 7) given from the external factor range information 114 (loop processing).

In this loop processing, first, a powering pattern in a combination of fluctuation conditions is calculated. Since the acceleration is affected by fluctuations in external factors, the powering pattern is different for each combination. Next, in each powering pattern, a process for examining a region where switching to the constant speed operation is performed is performed.

Specifically, in step S202, the table region limiting unit 118 sets the target traveling time at departure to Tmin and performs a simulation that calculates the appropriate speed profile of the present invention including constant speed operation and coasting operation while calculating the driving operation by the driving operation determination process (see FIG. 5) using the algorithm similar to that of the driving operation determination unit 14. A speed profile 260 (broken line 260 in the image of FIG. 9) is calculated by this simulation.

Next, in step S203, the table region limiting unit 118 extracts, in the speed profile 260 calculated in step S202, a point at which switching from powering operation to constant speed operation is performed (corresponding to a point 261 in the image of FIG. 9 and hereinafter referred to as a powering end point 261) and a point at which switching to coasting operation is performed (corresponding to a point 262 in the image of FIG. 9 and hereinafter referred to as a coasting start point 262).

Next, in step S204, the table region limiting unit 118 sets the target traveling time at departure to Tmax and performs, in the same manner as in step S202, a simulation that calculates an appropriate speed profile of the present invention including constant speed operation and coasting operation while calculating the driving operation by the driving operation determination process (see FIG. 5) using the algorithm similar to that of the driving operation determination unit 14. A speed profile 270 (broken line 270 in the image of FIG. 9) is calculated by this simulation.

In step S205, the table region limiting unit 118 extracts, in the speed profile 270 calculated in step S204, a point at which switching to the constant speed operation is performed (corresponding to a point 271 in the image of FIG. 9 and hereinafter referred to as a powering end point 271) and a point at which switching to the coasting operation is performed (corresponding to a point 272 in the image of FIG. 9 and hereinafter referred to as a coasting start point 272).

Next, in step S206, the table region limiting unit 118 calculates and records a constant speed switching region R using the powering end point 261 extracted in step S203 and the powering end point 271 extracted in step S205. Here, the calculation method of the constant speed switching region R will be described with reference to FIG. 9. When a rectangle having the powering end point 261 and the powering end point 271 at the diagonal vertices and having sides parallel to the axis is created, the region surrounded by the rectangle becomes the constant speed switching region R.

In step S207, the table region limiting unit 118 calculates and records a coasting switching region S using the coasting start point 262 extracted in step S203 and the coasting start point 272 extracted in step S205. The calculation method of the coasting switching region S will be described with reference to FIG. 9. When a rectangle having the coasting start point 262 and the coasting start point 272 at the diagonal vertices and having sides parallel to the axis is created, the region surrounded by the rectangle becomes the coasting switching region S.

As described above, the constant speed switching region R and the coasting switching region S under the traveling condition selected in the loop processing are calculated and recorded by the processing in steps S202 to S207 and all the loop processing are performed, and thereby, the constant speed switching region R and the coasting switching region S are calculated and recorded for all combinations of external factors (traveling conditions) given from the external factor range information 114.

Thereafter, in steps S208 and S209, the constant speed table information output region and the coasting table information output region are determined using the constant speed switching region R and the coasting switching region S obtained by the loop processing.

More specifically, in step S208, the union of the constant speed switching region R calculated for each combination of external factors (traveling conditions) by the above loop processing, which is determined to be a region where there is a possibility of switching to constant speed operation within the fluctuation range of the external factors, is determined as the constant speed table information output region. In step S209, the union of the coasting switching region S calculated for each combination of external factors (traveling conditions) by the above loop processing, which is determined to be a region where there is a possibility of switching to constant speed operation within the fluctuation range of the external factor, is determined as the coasting table information output region.

As described above, in the driving operation determination table data creation process, the processing of steps S201 to S208 is performed, so that the output region of the driving operation determination table data information 119 (constant speed table information and coasting table information) can be limited not to the table information related to the entire target section (overall table information 116) but to the range information in which there is a possibility that the driving operation can actually be performed in consideration of the fluctuation range of the external factor. As the driving operation determination table data information 119 based on the range information to which the output region is limited in this way, for example, it is preferable to image the range information of the region Q in FIG. 3.

Then, the driving operation determination table data creation unit 11 outputs (transmits), to the driving operation determination unit 14, the driving operation determination table data information 119 (constant speed table information and coasting table information) created by the table region limiting unit 118, and the braking pattern information 117 created by the overall table creation unit 115.

### (3) Summary

As described above, in the train operation support system 1 according to the present embodiment, the driving operation determination unit 14 can determine a speed profile that incorporates switching of driving operations between constant speed operation and coasting operation, based on the input information from the driving operation determination table data creation unit 11, the train position detector 12, and the train speed detector 13. Then, the driving operation determination table data creation unit 11 transmits only the driving operation determination table information (constant speed table information and coasting table information) included in the limited region to the driving operation determination unit 14. Since the table information transmitted in this way can limit the output region of information to be transmitted compared to the case where information on all grid points related to the train position and train speed is transmitted (see region P, region Q in FIG. 3), the data capacity of pattern information to be transmitted can be reduced. Further, since the data capacity of the pattern information can be reduced, even when there are limitations on the resources of the communication path between the driving operation determination table data creation unit 11 and the driving operation determination unit 14, pattern information can be transmitted at the timing until before switching of the driving operations.

Thus, according to the train operation support system 1 of the present embodiment, even when there are limitations on the computing powers and communication capacities in the train system, the burden on the communication capacities can be reduced by suppressing the data capacity of the input information. Furthermore, the train operation support system 1 according to the present embodiment can determine a speed profile (appropriate speed profile of the present invention) that incorporates switching of driving operations between the constant speed operation and the coasting operation based on the input information. Therefore, it is possible to control the train according to the goal of the train system. By supporting the realization of the appropriate speed profile of the present invention as described above, specifically, by partially performing the powering operation and the deceleration operation (braking) similar to the speed profile by the fastest traveling, it is possible to arrive at the stop point by the planned time (ensuring punctuality), while by suppressing acceleration to the maximum speed and incorporating coasting operation, it is possible to expect a great energy saving effect. In addition, by interposing constant speed operation and coasting operation during deceleration, it is possible to expect the effects of reducing the discomfort and pressure caused by sudden deceleration and improving passenger's comfort.

In the description of the present embodiment, in the train operation support system 1, the case in which the driving operation determination table data creation unit 11 (train operation support device) determines both the switching timing to the constant speed operation and the switching timing to the coasting operation has been described. However, the present invention is not limited to this, for example, when it is possible to recognize in advance that switching to constant speed operation or switching to coasting operation is unlikely to occur or when only rough punctuality is the goal of the train system, the train operation support device may perform calculation for limiting the output region of the driving operation determination table information for only one operation switching timing. In such a case as well, the effect of the present invention can be obtained.

In the train operation support system 1, the driving operation determination unit 14 determines an appropriate speed profile (switching of driving operations, etc.) in actual traveling, whereas the driving operation determination table data creation unit 11, if the external factors are given in advance, simulates the speed profile of each traveling condition based on the combination (traveling condition), and creates and outputs the driving operation determination table data information with a limited output range.

That is, in the train operation support system 1 according to the present embodiment, the driving operation determination unit 14 requires real-time control, whereas the driving operation determination table data creation unit 11 may create the driving operation determination table data information in advance to some extent (specifically, it is sufficient if the time difference is enough to guarantee that the external factor value range and the representative value given by the external factor range information 114 are information adapted to the current situation). Therefore, the driving operation determination table data creation unit 11, as long as the created information (driving operation determination table data information and braking pattern information) can be communicated to the driving operation determination unit 14, may be realized by a device different from other configurations of the train operation support system 1. Specifically, for example, it may be realized in a calculation device mounted on the train 10 separately from other configurations of the train operation support system 1, or may be realized in a calculation device installed on the ground side. Further, transmission means from the driving operation determination table data creation unit 11 to the driving operation determination unit 14 may be a wired network device on the vehicle, or may use a wireless network installed in each device, and the installation location and transmission means are not limited.

In this way, when the driving operation determination table data creation unit 11 is an independent calculation device (train operation support device), in the train system, only the train operation support device can be additionally installed without changing the device configuration that realizes other configurations of the train operation support system 1, and it becomes easy to add functions to the train system. In addition, the train operation support device may include the display unit 16.

In the description so far, the train operation support system 1 includes the propulsion 15 and the display unit 16 as a configuration in which the driving operation information calculated by the driving operation determination unit 14 is output. However, the system for performing train control based on the driving operation information calculated by the driving operation determination unit 14 may have any configuration as long as the driving operation information is output to the propulsion 15, and may have a configuration not including the display unit 16.

On the other hand, in the train operation support system 1 according to the present embodiment, the driving operation information may be output to the display unit 16 and the driving operation information may not be output to the propulsion 15 (or the propulsion 15 is not included). When the train operation support system 1 is configured in this way, the driving operation information is output to the display unit 16 such as a display of the cab of the train 10 or a terminal held by a driver of the train 10, so that the driver can recognize a driving operation method (such as switching timing of driving operations) for realizing an appropriate speed profile of the present invention. Therefore, since the driver can realize the appropriate speed profile of the present invention by operating the train 10 according to this driving operation method, according to the train operation support device, the train operation support system, and the train operation support method of the present invention, the effect of train operation support with which ensuring of punctuality and energy saving effect can be expected can be obtained.

The above-described embodiment has been described in detail for easy understanding of the present invention, and the present invention is not necessarily limited to the one having all the configurations described, and various variations are included. The scope of the invention is defined by the appended claims. Further, control lines and information lines indicate what is considered to be necessary for the description, and not all control lines and information lines in the product are necessarily shown. In practice, it may be considered that almost all components are connected to each other.

### Reference Signs List

- 1: train operation support system
- 10: train
- 11: driving operation determination table data creation unit
- 12: train position detector
- 13: train speed detector
- 14: driving operation determination unit
- 15: propulsion
- 16: display unit
- 111: speed limit information
- 112: train condition information
- 113: terrain condition information
- 114: external factor range information
- 115: overall table creation unit
- 116: overall table information
- 117: braking pattern information
- 118: table region limiting unit
- 119: driving operation determination table data information

## Claims

1. A driving operation determination table data creation unit (11) configured to provide, for a train system that determines a driving operation of a train (10) based on predetermined input information, driving operation determination table data information (119) that constitutes one of the predetermined input information and provides a determination criterion for the driving operation, the driving operation determination table data creation unit (11), comprising:
an overall table creation unit (115) configured to create constant speed table information and coasting table information with information on a combination of position, speed and table value relating to an entire target section on which the train travels as overall table information (116); and
a table region limiting unit (118) configured to limit, from the overall table information (116), constant speed table information and coasting table information of a region where switching of the driving operation is performed within a fluctuation range of an external factor representing a physical quantity that affects operation of the train (10) and that may change every time the train travels, and configured to output the limited constant speed table information and coasting table information as the driving operation determination table data information (119).

2. The driving operation determination table data creation unit (11)according to claim 1, wherein the table region limiting unit (118) is configured to create the driving operation determination table data information (199) limited from the overall table information (116) by performing a simulation using an algorithm similar to an algorithm used for determining the driving operation in the train system.

3. The driving operation determination table data creation unit (11)according to claim 1, further comprising a display unit (16) configured to display information related to traveling of the train based on driving operation information indicating the driving operation determined in the train system.

4. A train operation support system (1) for supporting a driving operation of a train (10), the train operation support system comprising:
a train position detector (12) configured to output train position information indicating a position of the train;
a train speed detector (13) configured to output train speed information indicating a speed of the train;
the driving operation determination table data creation unit (11) of any of claims 1 to 3 configured to create and output driving operation determination table data information providing a determination criterion for the driving operation for each position of the train and each speed of the train based on external factor range information (114) that defines a fluctuation range of an external factor that affects traveling of the train; and
a driving operation determination unit (14) configured to determine a driving operation based on the train position information, the train speed information, and the driving operation determination table data information.

5. The train operation support system (1) according to claim 4, further comprising a drive controller configured to perform drive control of the train based on driving operation information indicating the driving operation determined by the driving operation determination unit (14).

6. The train operation support system according to claim 4, wherein the driving operation determination table data information (119) and the overall table information (116) include constant speed table information relating to constant speed operation for traveling while maintaining a speed of the train and coasting table information relating to coasting operation for causing the train to travel by inertia.

7. The train operation support system 1 according to claim 4, wherein the external factor range information (114) includes information related to fluctuations of a boarding rate.

8. The train operation support system 1 according to claim 4, wherein the external factor range information (114) includes information related to fluctuations of an overhead wire voltage.

9. A train operation support method by a train operation support system (1) that supports a driving operation of a train (10), the train operation support method comprising:
a train position detection step for outputting train position information indicating a position of the train;
a train speed detection step for outputting train speed information indicating a speed of the train;
a driving operation determination table data creation step for creating and outputting driving operation determination table data information (119) providing a determination criterion for the driving operation for each position of the train (10) and each speed of the train (10) based on external factor range information (114) that defines a fluctuation range of an external factor that affects traveling of the train (10); and
a driving operation determination step for determining a driving operation based on the train position information, the train speed information, and the driving operation determination table data information (119),
wherein
the driving operation determination table data creation step includes
an overall table creation step for creating overall table information (116) according to table information relating to an entire target section on which the train travels; and
a table region limiting step for limiting, from the overall table information (116), table information of a region where switching of the driving operation is performed within a fluctuation range of the external factor representing a physical quantity that affects traveling operation of the train (10) and that may change every time the train travels, and outputting the limited table information as the driving operation determination table data information.

10. The train operation support method according to claim 9, wherein the table region limiting step creates the driving operation determination table data information (119) limited from the overall table information (116) by performing a simulation using an algorithm similar to an algorithm used for determining the driving operation in the driving operation determination step.

11. The train operation support method according to claim 9, further comprising a display step for displaying information related to traveling of the train (10) on a predetermined display (16) based on driving operation information indicating the driving operation determined in the driving operation determination step.

12. The train operation support method according to claim 9, further comprising a drive control step for performing drive control of the train (10) based on driving operation information indicating the driving operation determined in the driving operation determination step.

13. The train operation support method according to claim 9, wherein the driving operation determination table data information (119) and the overall table information (116) include constant speed table information relating to constant speed operation for traveling while maintaining a speed of the train (10) and coasting table information relating to coasting operation for causing the train (10) to travel by inertia.

## Patentansprüche

1. Fahrbetriebsbestimmungstabellendatenerzeugungseinheit (11), die ausgelegt ist, um für ein Zugsystem, das den Fahrbetrieb eines Zugs (10) basierend auf vorbestimmten Eingabeinformationen bestimmt, Fahrbetriebsbestimmungstabellendateninformationen (119) bereitzustellen, die eine aus den vorbestimmten Eingabeinformationen darstellen und ein Bestimmungskriterium für den Fahrbetrieb bereitstellen, wobei die Fahrbetriebsbestimmungstabellendatenerzeugungseinheit (11) Folgendes umfasst:
eine Gesamttabellenerzeugungseinheit (115), die ausgelegt ist, um Konstantgeschwindigkeitstabelleninformationen und Rolltabelleninformationen mit Informationen über eine Kombination aus Position, Geschwindigkeit und Tabellenwert in Bezug auf einen gesamten Zielabschnitt, auf dem der Zug fährt, als Gesamttabelleninformationen (116) zu erzeugen; und
eine Tabellenregionsbegrenzungseinheit (118), die ausgelegt ist, um aus den Gesamttabelleninformationen (116) Konstantgeschwindigkeitstabelleninformationen und Rolltabelleninformationen einer Region zu begrenzen, in der ein Umschalten des Fahrbetriebs innerhalb eines Schwankungsbereich eines externen Faktors ausgeführt wird, der eine physische Größe darstellt, die sich auf den Betrieb des Zugs (10) auswirkt und die sich jederzeit ändern kann, wenn der Zug fährt, und die ausgelegt ist, um die begrenzten Konstantgeschwindigkeitstabelleninformationen und Rolltabelleninformationen als die Fahrbetriebsbestimmungstabellendateninformationen (119) auszugeben.

2. Fahrbetriebsbestimmungstabellendatenerzeugungseinheit (11) nach Anspruch 1, wobei die Tabellenregionsbegrenzungseinheit (118) ausgelegt ist, um die Fahrbetriebsbestimmungstabellendateninformationen (199), die aus den Gesamttabelleninformationen (116) begrenzt sind, durch Ausführen einer Simulation unter Verwendung eines Algorithmus zu erzeugen, der einem zur Bestimmung des Fahrbetriebs im Zugsystem verwendeten Algorithmus ähnelt.

3. Fahrbetriebsbestimmungstabellendatenerzeugungseinheit (11) nach Anspruch 1, die weiters einen Anzeigeeinheit (16) umfasst, die ausgelegt ist, um Informationen in Bezug auf die Fahrt des Zugs basierend auf Fahrbetriebsinformationen anzuzeigen, die den im Zugsystem bestimmten Fahrbetrieb angeben.

4. Zugbetriebsunterstützungssystem (1) zum Unterstützen des Fahrbetriebs eines Zugs (10), wobei das Zugbetriebsunterstützungssystem Folgendes umfasst:
einen Zugpositionsdetektor (12), der ausgelegt ist, um Zugpositionsinformationen auszugeben, welche eine Position des Zugs angeben;
einen Zuggeschwindigkeitsdetektor (13), der ausgelegt ist, um Zuggeschwindigkeitsinformationen auszugeben, welche die Geschwindigkeit des Zugs angeben;
wobei eine Fahrbetriebsbestimmungstabellendatenerzeugungseinheit (11) nach einem der Ansprüche 1 bis 3 ausgelegt ist, um Fahrbetriebsbestimmungstabellendateninformationen zu erzeugen und auszugeben, die ein Bestimmungskriterium für den Fahrbetrieb für jede Position des Zugs und jede Geschwindigkeit des Zugs basierend auf Bereichsinformationen zum externen Faktor (114) bereitstellen, die einen Schwankungsbereich eines externen Faktors definieren, der sich auf die Fahrt des Zugs auswirkt; und
eine Fahrbetriebsbestimmungseinheit (14), die ausgelegt ist, um einen Fahrbetrieb basierend auf den Zugpositionsinformationen, den Zuggeschwindigkeitsinformationen und den Fahrbetriebsbestimmungstabellendateninformationen zu bestimmen.

5. Zugbetriebsunterstützungssystem (1) nach Anspruch 4, das weiters eine Fahrsteuerung umfasst, die ausgelegt ist, um eine Fahrsteuerung des Zugs basierend auf Fahrbetriebsinformationen auszuführen, die den durch die Fahrbetriebsbestimmungseinheit (14) bestimmten Fahrbetrieb angeben.

6. Zugbetriebsunterstützungssystem nach Anspruch 4, wobei die Fahrbetriebsbestimmungstabellendateninformationen (119) und die Gesamttabelleninformationen (116) Konstantgeschwindigkeitstabelleninformationen in Bezug auf den Konstantgeschwindigkeitsbetrieb für eine Fahrt, bei der eine Geschwindigkeit des Zugs aufrechterhalten wird, und Rolltabelleninformationen in Bezug auf einen Rollbetrieb umfasst, der bewirkt, dass der Zug aufgrund von Trägheit fährt.

7. Zugbetriebsunterstützungssystem 1 nach Anspruch 4, wobei die Bereichsinformationen zum externen Faktor (114) Informationen in Bezug auf Schwankungen der Zustiegsrate umfassen.

8. Zugbetriebsunterstützungssystem 1 nach Anspruch 4, wobei die Bereichsinformationen zum externen Faktor (114) Informationen in Bezug auf Schwankungen einer Oberleitungsdrahtspannung umfassen.

9. Zugbetriebsunterstützungsverfahren mittels eines Zugbetriebsunterstützungssystems (1), das einen Fahrbetrieb eines Zugs (10) unterstützt, wobei das Zugbetriebsunterstützungsverfahren Folgendes umfasst:
einen Zugpositionsdetektionsschritt zum Ausgeben von Zugpositionsinformationen, die eine Position des Zugs angeben;
einen Zuggeschwindigkeitsdetektionsschritt zum Ausgeben von Zuggeschwindigkeitsinformationen, die eine Geschwindigkeit des Zugs angeben;
einen Fahrbetriebsbestimmungstabellendatenerzeugungsschritt zum Erzeugen und Ausgeben von Fahrbetriebsbestimmungstabellendateninformationen (119), die ein Bestimmungskriterium für den Fahrbetrieb für jede Position des Zugs (10) und jede Geschwindigkeit des Zugs (10) basierend auf Bereichsinformationen zum externen Faktor (114) bereitstellen, die einen Schwankungsbereich eines externen Faktors definieren, der sich auf die Fahrt des Zugs (10) auswirkt; und
einen Fahrbetriebsbestimmungsschritt zum Bestimmen eines Fahrbetriebs basierend auf den Zugpositionsinformationen, den Zuggeschwindigkeitsinformationen und den Fahrbetriebsbestimmungstabellendateninformationen (119),
wobei der Fahrbetriebsbestimmungstabellendatenerzeugungsschritt
einen Gesamttabellenerzeugungsschritt zum Erzeugen von Gesamttabelleninformationen (116) gemäß Tabelleninformationen in Bezug auf einen gesamten Zielabschnitt, auf dem der Zug fährt, umfasst; und
einen Tabellenregionsbegrenzungsschritt zum Begrenzen, aus den Gesamttabelleninformationen (116), von Tabelleninformationen einer Region, in der ein Umschalten des Fahrbetriebs innerhalb eines Schwankungsbereichs des externen Faktors ausgeführt wird, der eine physikalische Größe darstellt, die sich auf den Betrieb des Zugs (10) auswirkt und die sich jederzeit ändern kann, wenn der Zug fährt, und Ausgeben der begrenzten Tabelleninformationen als die Fahrbetriebsbestimmungstabellendateninformationen umfasst.

10. Zugbetriebsunterstützungsverfahren nach Anspruch 9, wobei der Tabellenregionsbegrenzungsschritt die Fahrbetriebsbestimmungstabellendateninformationen (119) erzeugt, die aus den Gesamttabelleninformationen (116) durch Ausführen einer Simulation unter Verwendung eines Algorithmus begrenzt werden, der einem zur Bestimmung des Fahrbetriebs im Zugsystem verwendeten Algorithmus ähnelt.

11. Zugbetriebsunterstützungsverfahren nach Anspruch 9, das weiters einen Anzeigeschritt zum Anzeigen von Informationen in Bezug auf die Fahrt des Zugs (10) auf einer vorbestimmten Anzeige (16) basierend auf Fahrbetriebsinformationen umfasst, die den im Fahrbetriebsbestimmungsschritt bestimmten Fahrbetrieb angeben.

12. Zugbetriebsunterstützungsverfahren nach Anspruch 9, das weiters einen Fahrsteuerschritt zum Ausführen einer Fahrsteuerung des Zugs (10) basierend auf Fahrbetriebsinformationen umfasst, die den im Fahrbetriebsbestimmungsschritt bestimmten Fahrbetrieb angeben.

13. Zugbetriebsunterstützungsverfahren nach Anspruch 9, wobei die Fahrbetriebsbestimmungstabellendateninformationen (119) und die Gesamttabelleninformationen (116) Konstantgeschwindigkeitstabelleninformationen in Bezug auf einen Konstantgeschwindigkeitsbetrieb zum Fahren bei Aufrechterhaltung der Geschwindigkeit des Zugs (10) und Rolltabelleninformationen in Bezug auf einen Rollbetrieb, der bewirkt, dass der Zug (10) aufgrund von Trägheit fährt, umfassen.

## Revendications

1. Unité de création de données de table de détermination d'opération de conduite (11) configurée de manière à fournir, pour un système de train qui détermine une opération de conduite d'un train (10) sur la base d'informations d'entrée prédéterminées, des informations de données de table de détermination d'opération de conduite (119) qui constituent l'une des informations d'entrée prédéterminées et fournissent un critère de détermination pour l'opération de conduite, l'unité de création de données de table de détermination d'opération de conduite (11), comprenant :
une unité de création de table globale (115) configurée de manière à créer des informations de table de déplacement à vitesse constante et des informations de table de déplacement en roue libre avec des informations sur une combinaison de position, de vitesse et de valeur de table relatives à une section cible entière sur laquelle le train se déplace, en tant que des informations de table globale (116) ; et
une unité de limitation de région de table (118) configurée de manière à limiter, à partir des informations de table globale (116), des informations de table de déplacement à vitesse constante et des informations de table de déplacement en roue libre d'une région où une commutation de l'opération de conduite est mise en oeuvre dans une plage de fluctuation d'un facteur externe représentant une quantité physique qui affecte l'opération du train (10) et qui peut varier à chaque fois que le train se déplace, et configurée de manière à fournir en sortie les informations de table de déplacement à vitesse constante et les informations de table de déplacement en roue libre limitées en tant que les informations de données de table de détermination d'opération de conduite (119).

2. Unité de création de données de table de détermination d'opération de conduite (11) selon la revendication 1, dans laquelle l'unité de limitation de région de table (118) est configurée de manière à créer les informations de données de table de détermination d'opération de conduite (199) limitées à partir des informations de table globale (116) en mettant en oeuvre une simulation en faisant appel à un algorithme similaire à un algorithme utilisé en vue de déterminer l'opération de conduite dans le système de train.

3. Unité de création de données de table de détermination d'opération de conduite (11) selon la revendication 1, comprenant en outre une unité d'affichage (16) configurée de manière à afficher des informations relatives au déplacement du train sur la base d'informations d'opération de conduite indiquant l'opération de conduite déterminée dans le système de train.

4. Système d'aide à l'opération de train (1) destiné à aider dans le cadre d'une opération de conduite d'un train (10), le système d'aide à l'opération de train comprenant :
un détecteur de position de train (12) configuré de manière à fournir en sortie des informations de position de train indiquant une position du train ;
un détecteur de vitesse de train (13) configuré de manière à fournir en sortie des informations de vitesse de train indiquant une vitesse du train ;
l'unité de création de données de table de détermination d'opération de conduite (11) selon l'une quelconque des revendications 1 à 3, configurée de manière à créer et à fournir en sortie des informations de données de table de détermination d'opération de conduite fournissant un critère de détermination pour l'opération de conduite, pour chaque position du train et chaque vitesse du train, sur la base d'informations de plage de facteur externe (114) qui définissent une plage de fluctuation d'un facteur externe qui affecte le déplacement du train ; et
une unité de détermination d'opération de conduite (14) configurée de manière à déterminer une opération de conduite sur la base des informations de position de train, des informations de vitesse de train et des informations de données de table de détermination d'opération de conduite.

5. Système d'aide à l'opération de train (1) selon la revendication 4, comprenant en outre un contrôleur d'entraînement configuré de manière à mettre en oeuvre une commande d'entraînement du train sur la base d'informations d'opération de conduite indiquant l'opération de conduite déterminée par l'unité de détermination d'opération de conduite (14).

6. Système d'aide à l'opération de train selon la revendication 4, dans lequel les informations de données de table de détermination d'opération de conduite (119) et les informations de table globale (116) incluent des informations de table de déplacement à vitesse constante connexes à une opération de déplacement à vitesse constante permettant de se déplacer tout en maintenant une vitesse du train et des informations de table de déplacement en roue libre connexes à une opération de déplacement en roue libre pour amener le train à se déplacer par inertie.

7. Système d'aide à l'opération de train (1) selon la revendication 4, dans lequel les informations de plage de facteur externe (114) incluent des informations connexes à des fluctuations d'un taux d'embarquement.

8. Système d'aide à l'opération de train (1) selon la revendication 4, dans lequel les informations de plage de facteur externe (114) incluent des informations connexes à des fluctuations d'une tension de câble aérien.

9. Procédé d'aide à l'opération de train mis en oeuvre par un système d'aide à l'opération de train (1) qui aide dans le cadre d'une opération de conduite d'un train (10), le procédé d'aide à l'opération de train comprenant :
une étape de détection de position de train consistant à fournir en sortie des informations de position de train indiquant une position du train ;
une étape de détection de vitesse de train consistant à fournir en sortie des informations de vitesse de train indiquant une vitesse du train ;
une étape de création de données de table de détermination d'opération de conduite consistant à créer et à fournir en sortie des informations de données de table de détermination d'opération de conduite (119) fournissant un critère de détermination pour l'opération de conduite pour chaque position du train (10) et chaque vitesse du train (10) sur la base d'informations de plage de facteur externe (114) qui définissent une plage de fluctuation d'un facteur externe qui affecte un déplacement du train (10) ; et
une étape de détermination d'opération de conduite consistant à déterminer une opération de conduite sur la base des informations de position de train, des informations de vitesse de train et des informations de données de table de détermination d'opération de conduite (119), dans laquelle
l'étape de création de données de table de détermination d'opération de conduite inclut :
une étape de création de table globale consistant à créer des informations de table globale (116) selon des informations de table connexes à une section cible entière sur laquelle le train se déplace ; et
une étape de limitation de région de table consistant à limiter, à partir des informations de table globale (116), des informations de table d'une région où une commutation de l'opération de conduite est mise en oeuvre dans une plage de fluctuation du facteur externe représentant une quantité physique qui affecte une opération de déplacement du train (10) et qui peut varier à chaque fois que le train se déplace, et à fournir en sortie les informations de table limitées en tant que les informations de données de table de détermination d'opération de conduite.

10. Procédé d'aide à l'opération de train selon la revendication 9, dans lequel l'étape de limitation de région de table crée les informations de données de table de détermination d'opération de conduite (119) limitées, à partir des informations de table globale (116), en mettant en oeuvre une simulation en faisant appel à un algorithme similaire à un algorithme utilisé en vue de déterminer l'opération de conduite à l'étape de détermination d'opération de conduite.

11. Procédé d'aide à l'opération de train selon la revendication 9, comprenant en outre une étape d'affichage pour afficher des informations connexes à un déplacement du train (10), sur un affichage prédéterminé (16), sur la base d'informations d'opération de conduite indiquant l'opération de conduite déterminée à l'étape de détermination d'opération de conduite.

12. Procédé d'aide à l'opération de train selon la revendication 9, comprenant en outre une étape de commande d'entraînement pour mettre en oeuvre une commande d'entraînement du train (10) sur la base d'informations d'opération de conduite indiquant l'opération de conduite déterminée à l'étape de détermination d'opération de conduite.

13. Procédé d'aide à l'opération de train selon la revendication 9, dans lequel les informations de données de table de détermination d'opération de conduite (119) et les informations de table globale (116) incluent des informations de table de déplacement à vitesse constante connexes à une opération de déplacement à vitesse constante permettant de se déplacer tout en maintenant une vitesse du train (10), et des informations de table de déplacement en roue libre connexes à une opération de déplacement en roue libre pour amener le train (10) à se déplacer par inertie.
